# EUROPEAN PATENT APPLICATION

(11) **EP 4 258 169 A1**
(43) Date of publication of application: **11.10.2023**
(21) Application number: 21908946.3
(22) Date of filing: 16.11.2021
(51) Int. Cl.: G06N 3/04, G06N 3/08

(54) **MODEL TRAINING METHOD, APPARATUS, STORAGE MEDIUM, AND DEVICE**

(30) Priority: 25.12.2020 CN 202011566357
(71) Applicant: Huawei Cloud Computing Technologies Co., Ltd., Guizhou 550025 (CN)
(72) Inventor: LI, Yi, Shenzhen, Guangdong 518129 (CN); LIAN, Yunwen, Shenzhen, Guangdong 518129 (CN)
(74) Representative: Maiwald GmbH
(86) International application number: PCT/CN2021/131011
(87) International publication number: WO 2022/134946

(57) **Abstract**

This application discloses a model training method and apparatus, a storage medium, and a device, and pertains to the field of AI. In embodiments of this application, gradient information corresponding to a neural network model may be obtained; then training data in a first training data subset is evaluated based on the gradient information, to obtain an evaluation result; and finally an index table is adjusted based on the evaluation result. In this way, an adjusted index table is used to obtain a second training data subset in a next round. In other words, in embodiments of this application, the index table may be dynamically adjusted based on the gradient information in a training process, and further, the corresponding second training data subset may be read based on the index table in the next round. The training data is evaluated in each round, and a training data set in the training process is dynamically adjusted. In this way, a training objective can be achieved more quickly in the model training process, and training duration and computing power consumption for training are reduced.

## Description

This application claims priority to Chinese Patent Application No. 202011566357.8, filed with the China National Intellectual Property Administration on December 25, 2020 and entitled "MODEL TRAINING METHOD AND APPARATUS, STORAGE MEDIUM, AND DEVICE", which is incorporated herein by reference in its entirety.

### TECHNICAL FIELD

This application relates to the field of artificial intelligence (artificial intelligence, AI), and in particular, to a model training method and apparatus, a storage medium, and a device.

### BACKGROUND

Currently, artificial intelligence (artificial intelligence, AI) has attracted wide attention, and one of core technologies of AI is deep learning. Deep learning is a machine learning technology based on a neural network model. The neural network model includes a plurality of computing layers, and each computing layer corresponds to at least one weight. The neural network model is usually trained for a plurality of rounds, and each round indicates that the neural network model performs operational learning on all training data once. One round may include a plurality of iterations, and the iteration of the neural network model may be as follows: The neural network model performs operational learning based on data of a batch size, optimizes a weight of the model, and reduces a difference between a prediction result of the neural network model and prior knowledge. In view of an increasingly high requirement on model performance at present, an increasingly large sample data set is required. There is also an increasingly high requirement on machine computing power for model training based on the sample data set, and training duration becomes longer. How to improve model training efficiency so that the model achieves a training objective with low computing power and low time costs has become a technical problem to be urgently resolved currently.

### SUMMARY

This application provides a model training method. Training data is evaluated in each round, and a training data set in a training process is dynamically adjusted. In this way, a training objective can be achieved more quickly in the model training process, and training duration and computing power consumption for training are reduced.

According to a first aspect, a model training method is provided. The method is applied to a model training apparatus. The model training apparatus performs iterative training on a to-be-trained neural network model. The iterative training includes N training rounds. In an n^{th} training round, where N and n are positive integers and n is less than N, the method includes: obtaining a first training data subset from a training data set based on an index table; training the neural network model based on training data in the first training data subset, and obtaining gradient information corresponding to the neural network model; evaluating the training data in the first training data subset based on the gradient information, to obtain an evaluation result; and adjusting the index table based on the evaluation result, where an adjusted index table is used to obtain a second training subset in an (n+1)^{th} round.

In this embodiment of this application, the training data is evaluated in each round based on the gradient information corresponding to the neural network model, to obtain the evaluation result, and further, the training data set in a training process is dynamically adjusted based on the evaluation result. In this way, the model achieves a training objective with low computing power and low time costs, training duration and computing power consumption for training are reduced, and model training efficiency is improved.

Optionally, the evaluating the training data in the first training data subset based on the gradient information, to obtain an evaluation result includes: obtaining a preset evaluation rule; and evaluating the training data in the first training data subset based on the preset evaluation rule and the gradient information, to obtain the evaluation result.

The preset evaluation rule may be stored in a rule library. When a user taps a dynamic training option to start training of the neural network model, the preset evaluation rule is obtained from the rule library. The preset evaluation rule is set based on experience, and different to-be-trained neural networks correspond to different preset evaluation rules. The preset evaluation rule includes a determining condition and a corresponding evaluation result when a gradient information determining condition is met. A met determining condition is determined based on the gradient information, and an evaluation result corresponding to the training data is obtained based on the met determining condition. The gradient information obtained when the model is trained by using the training data is used to determine impact of the training data on a model training effect, and further, the training data set is dynamically adjusted based on the impact, that is, the training data set is dynamically adjusted based on an effect of the training data on model training in the training process. In this way, the model achieves the training objective with low computing power and low time costs, the training duration and the computing power consumption for training are reduced, and the model training efficiency is improved.

Optionally, the evaluation result includes an effect of the training data on model training, and/or a manner of processing the training data in a next training round.

The effect of the training data on the model training is impact of the training data on a model convergence result. The effect of the training data on the model training may include impact of the training data on a loss value decrease, impact of the training data on precision improvement, or impact of the training data on accuracy improvement. The effect of the training data on the model training may be understood as a contribution that can be provided by the training data to training precision that needs to be achieved by the model training. The gradient information of the neural network model is obtained by training the model by using the training data, and processing of the training data is directly evaluated based on the gradient information, to obtain the manner of processing the training data in the next training round, so as to adjust the training data set. In this way, the model achieves the training objective with low computing power and low time costs, the training duration and the computing power consumption for training are reduced, and the model training efficiency is improved.

Optionally, the effect of the training data on the model training includes: "invalid", where "invalid" indicates that a contribution provided by the training data to training precision to be achieved by the model training is 0; "inefficient", where "inefficient" indicates that a contribution provided by the training data to training precision to be achieved by the model training reaches a first contribution degree; "efficient", where "efficient" indicates that a contribution provided by the training data to training precision to be achieved by the model training reaches a second contribution degree, and the second contribution degree is greater than a first contribution degree; or "indeterminate", where "indeterminate" indicates that a contribution provided by the training data to training precision to be achieved by the model training is indeterminate.

"Invalid" may be understood as that the training data has no impact on the loss value decrease, or has no impact on the precision improvement, or has no impact on the accuracy improvement. "Inefficient" may be understood as that the training data has little impact on the loss value decrease, or has little impact on the precision improvement, or has little impact on the accuracy improvement. "Efficient" may be understood as that the training data has great impact on the loss value decrease, or has great impact on the precision improvement, or has great impact on the accuracy improvement. "Indeterminate" may be understood as that the training data has indeterminate impact on the loss value decrease, or has indeterminate impact on the precision improvement, or has indeterminate impact on the accuracy improvement.

Optionally, the manner of processing the training data in the next training round includes: deleting the training data, decreasing a weight of the training data, increasing a weight of the training data, or retaining the training data.

The deleting the training data means that the deleted training data is no longer used for training in the next training round. The decreasing a weight of the training data means that a quantity of times that the training data is used for training in the next training round is decreased. The increasing a weight of the training data means that a quantity of times that the training data is used for training in the next training round is increased. The retaining the training data means that the training data is still used for training in the next training round.

Optionally, the adjusting the index table based on the evaluation result includes: deleting, based on the evaluation result, an index record that is in the index table and that is related to the training data; and/or increasing a quantity of index records of the training data in the index table based on the evaluation result; and/or decreasing a quantity of index records of the training data in the index table based on the evaluation result; and/or retaining an index record of the training data in the index table based on the evaluation result.

Optionally, the method further includes: testing the neural network model by using test data, to obtain a test result; and updating the preset evaluation rule based on a preset target value and the test result.

In this embodiment of this application, the preset evaluation rule may be further updated. To be specific, in the model training process, the preset rule for evaluating the training data is continuously updated, to improve adaptability of the preset rule. Further, the test result is obtained by testing the model by using the test data. Performance, such as a precision value, accuracy, or a loss value of the current model, achieved by the current model may be obtained based on the test result. Then, whether the current model reaches the training precision is evaluated based on the test result and the preset target value, to determine impact of the preset rule on the training precision to be achieved by the model training. Further, the preset rule is adjusted based on the impact. This improves accuracy of training data evaluation performed based on the preset rule.

Optionally, the updating the preset evaluation rule based on a preset target value and the test result includes: when the test result reaches or is better than the preset target value, updating the preset evaluation rule based on a positive feedback mechanism; or when the test result does not reach the preset target value, updating the preset evaluation rule based on a negative feedback mechanism.

When the test result reaches or is better than the preset target value, that is, setting of the preset rule is advantageous for the model training to reach the training precision, the preset evaluation rule is updated based on the positive feedback mechanism, that is, intervention of the preset rule in the training data is enhanced. When the test result does not reach the preset target value, that is, setting of the preset rule is disadvantageous for the model training to achieve the training precision, the preset evaluation rule is updated based on the negative feedback mechanism, that is, intervention of the preset rule in the training data is weakened.

Optionally, the neural network model includes a plurality of computing layers; and the obtaining gradient information corresponding to the neural network model includes: obtaining gradient information for at least one computing layer of the neural network model.

Optionally, the neural network model includes m computing layers, and m is a positive integer; and the obtaining gradient information for at least one computing layer of the neural network model includes: obtaining gradient information for an m^{th} computing layer of the neural network model.

In this embodiment of this application, gradient information for a computing layer is selected to evaluate the training data. The training data may be evaluated based on a key layer of the neural network model, or the last layer for forward propagation of the neural network model may be selected.

Optionally, before the model training apparatus performs iterative training on the to-be-trained neural network model, the method further includes: receiving configuration information for the model training that is configured by a user through an interface, where the configuration information includes dynamic training information that is selected by the user through the interface, and the configuration information further includes one or more of the following information: information about the neural network model, information about the training data set, a running parameter for the model training, and computing resource information for the model training.

In this embodiment of this application, a configuration interface may be provided for the user, and the user selects the dynamic training information to meet a requirement of the user for a dynamic model training process.

According to a second aspect, this application further provides a model training apparatus. The model training apparatus performs iterative training on a to-be-trained neural network model. The iterative training includes N training rounds. In an n^{th} training round, where N and n are positive integers and n is less than N, the apparatus includes: an obtaining module, configured to obtain a first training data subset from a training data set based on an index table; a training module, configured to train the neural network model based on training data in the first training data subset, and obtain gradient information corresponding to the neural network model; an evaluation module, configured to evaluate the training data in the first training data subset based on the gradient information, to obtain an evaluation result; and an adjustment module, configured to adjust the index table based on the evaluation result, where an adjusted index table is used to obtain a second training subset in an (n+1)^{th} round.

Optionally, the evaluation module is specifically configured to: obtain a preset evaluation rule; and evaluate the training data in the first training data subset based on the preset evaluation rule and the gradient information, to obtain the evaluation result.

Optionally, the evaluation result includes an effect of the training data on model training, and/or a manner of processing the training data in a next training round.

Optionally, the effect of the training data on the model training includes: "invalid", where "invalid" indicates that a contribution provided by the training data to training precision to be achieved by the model training is 0; "inefficient", where "inefficient" indicates that a contribution provided by the training data to training precision to be achieved by the model training reaches a first contribution degree; "efficient", where "efficient" indicates that a contribution provided by the training data to training precision to be achieved by the model training reaches a second contribution degree, and the second contribution degree is greater than a first contribution degree; or "indeterminate", where "indeterminate" indicates that a contribution provided by the training data to training precision to be achieved by the model training is indeterminate.

Optionally, the manner of processing the training data in the next training round includes: deleting the training data, decreasing a weight of the training data, increasing a weight of the training data, or retaining the training data.

Optionally, the apparatus further includes a rule update module, and the rule update module is configured to: test the neural network model by using test data, to obtain a test result; and update the preset evaluation rule based on a preset target value and the test result.

Optionally, the rule update module is further configured to: when the test result reaches or is better than the preset target value, update the preset evaluation rule based on a positive feedback mechanism; or when the test result does not reach the preset target value, update the preset evaluation rule based on a negative feedback mechanism.

Optionally, the neural network model includes a plurality of computing layers; and the obtaining gradient information corresponding to the neural network model includes: obtaining gradient information for at least one computing layer of the neural network model.

Optionally, the neural network model includes m computing layers, and m is a positive integer; and the obtaining gradient information for at least one computing layer of the neural network model includes: obtaining gradient information for an m^{th} computing layer of the neural network model.

Optionally, before the model training apparatus performs iterative training on the to-be-trained neural network model, the apparatus further includes a configuration module, where the configuration module is specifically configured to receive configuration information for the model training that is configured by a user through an interface, where the configuration information includes dynamic training information that is selected by the user through the interface, and the configuration information further includes one or more of the following information: information about the neural network model, information about the training data set, a running parameter for the model training, and computing resource information for the model training.

According to a third aspect, this application further provides a computer device, including: a memory, configured to store a computer program; and a processor, configured to execute the computer program stored in the memory. When the computer program is executed, the processor is configured to perform the method provided in the first aspect and the optional implementations of the first aspect.

According to a fourth aspect, this application further provides a computer-readable storage medium. The computer-readable storage medium includes computer instructions, and when the computer instructions are run on an electronic device, the electronic device is enabled to perform the method provided in the first aspect and the optional implementations of the first aspect.

Technical effects achieved by the second aspect, the third aspect, and the fourth aspect are similar to the technical effects achieved by corresponding technical means in the first aspect. Details are not described herein again.

The technical solutions are as follows:
Beneficial effects achieved by the technical solutions provided in this application include at least the following:
In embodiments of this application, the training data is evaluated in each round based on the gradient information corresponding to the neural network model, to obtain the evaluation result, and further, the training data set in the training process is dynamically adjusted based on the evaluation result. In this way, the model achieves the training objective with low computing power and low time costs, the training duration and the computing power consumption for training are reduced, and the model training efficiency is improved.

### BRIEF DESCRIPTION OF DRAWINGS

FIG. 1 is a schematic diagram of a structure of a model training apparatus according to an embodiment of this application;
FIG. 2 is a schematic diagram of deployment of a model training apparatus according to an embodiment of this application;
FIG. 3 is a schematic diagram of application of a model training apparatus according to an embodiment of this application;
FIG. 4 is another schematic diagram of deployment of a model training apparatus according to an embodiment of this application;
FIG. 5 is a schematic diagram of a structure of a computing device according to an embodiment of this application;
FIG. 6 is a flowchart of a model training method according to an embodiment of this application;
FIG. 7 is a schematic diagram of a configuration interface according to an embodiment of this application;
FIG. 8 is a schematic diagram of model training according to an embodiment of this application;
FIG. 9 is a schematic flowchart of a rule update method according to an embodiment of this application; and
FIG. 10 is a schematic diagram of a structure of a computer system according to an embodiment of this application.

### DESCRIPTION OF EMBODIMENTS

To make the objectives, the technical solutions, and advantages of this application clearer, the following further describes the implementations of this application in detail with reference to the accompanying drawings.

Before embodiments of this application are described in detail, application scenarios in embodiments of this application are first described.

Currently, an AI model has been widely used in fields such as image recognition, video analysis, speech recognition, natural language translation, and self-driving control. The AI model represents a mathematical algorithm that can be trained to complete learning of data features and further can be used for inference. There are a plurality of different types of AI models in the industry. For example, a neural network model is a typical AI model. The neural network model is a type of mathematical calculation model that imitates a structure and a function of a biological neural network (a central nervous system of an animal). One neural network model may include a plurality of computing layers having different functions, and each layer includes a parameter and a calculation formula. Based on different calculation formulas or different functions, different computing layers of the neural network model have different names. For example, a layer for convolution calculation is referred to as a convolutional layer, and may be used to extract a feature from an input image.

There are mainly three factors affecting AI model training: a training data set, a neural network model, and machine computing power. With a wider range of application scenarios of the current AI model, the AI model needs to deal with complex scenarios. As a result, the AI model to be trained becomes more complex. In addition, to improve a training effect of the AI model, a larger data volume of a training data set is required. In this case, a calculation amount in a training process increases, a requirement on the machine computing power is increasingly high, and required training time becomes longer. How to optimize an AI model training process to obtain an AI model with a better effect within minimum duration is the focus of the industry.

Based on this, to improve performance of Al model training, after compiling an initial to-be-trained neural network model, a developer may train the to-be-trained neural network model by using a model training method provided in embodiments of this application, to effectively filter training data based on a training result of training data in each training round. In this way, training data used for subsequent training is more valid, training duration is reduced, and a training convergence speed is increased. The to-be-trained neural network model is an initial AI model that needs to be trained, and the to-be-trained neural network model may be represented in a form of code.

Embodiments of this application provide a model training method. The method is performed by a model training apparatus. A function of the model training apparatus may be implemented by a software system, or may be implemented by a hardware device, or may be implemented by a combination of the software system and the hardware device.

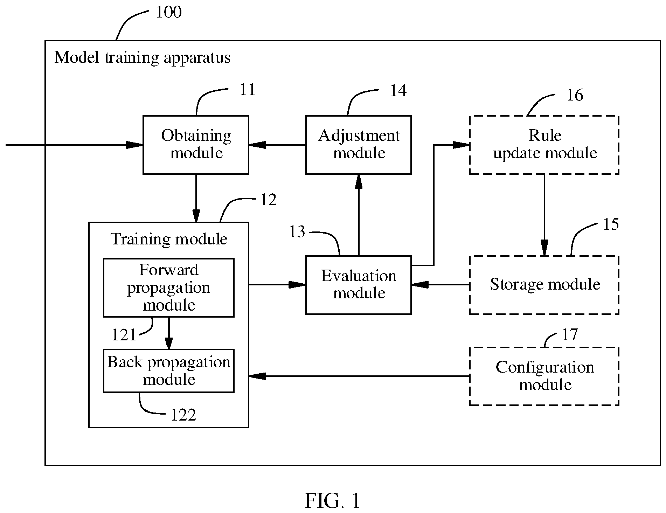

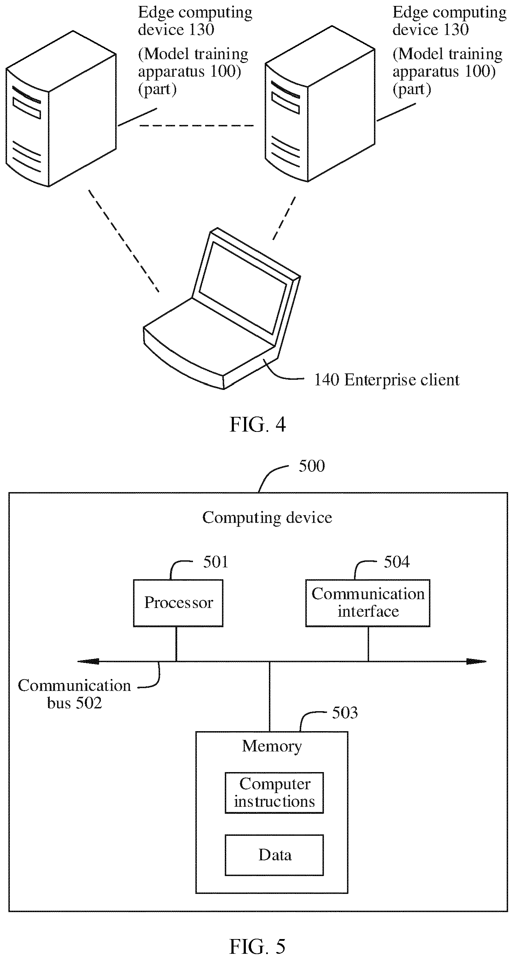

When the model training apparatus is a software apparatus, as shown in FIG. 1, the model training apparatus 100 may be logically divided into a plurality of modules. Each module may have a different function, and the function of each module is implemented by a processor in a computing device by reading and executing instructions in a memory. A structure of the computing device may be a computing device 500 shown in FIG. 5 below. For example, the model training apparatus 100 may include an obtaining module 11, a training module 12, an evaluation module 13, and an adjustment module 14. The model training apparatus 100 trains a to-be-trained neural network model in an n^{th} training round by invoking each module, where n is a positive integer. In a specific implementation, the model training apparatus 100 may perform content described in steps 601 to 604 and steps 91 to 95 described below. It should be noted that division of the structure and functional modules of the model training apparatus 100 is only an example in embodiments of this application, but specific division is not limited.

The obtaining module 11 is configured to obtain a first training data subset from a training data set based on an index table. The training data set may be uploaded by a user, or may be stored in another apparatus or device. Training data in the training data set may be stored in a memory of a same device, or may be stored in memories of different devices. The index table is used to search for the training data in the training data set. For example, an index table is created for a training data set, an index record is created in the index table for each piece of training data in the training data set, and corresponding training data may be found based on the index record. The index record may include a storage address (for example, a pointer pointing to the storage address) of the training data in the memory, and the index record may further include all or a part of the training data. The index record may exist in a form of a file name, and the corresponding training data or the storage address of the training data is found by using the file name in the index table. Therefore, training data having an index record in the index table has an opportunity to be read and used for training. The obtaining module 11 is configured to: find, based on an index record in the index table, a storage location of training data in the training data set, and obtain the corresponding training data based on the storage location, that is, obtain a first training data subset. The first training data subset includes one or more pieces of training data, and a quantity of training data in the first training data subset may be determined based on a batch size. The batch size is used to determine a quantity of training data read in each iteration.

The training module 12 is configured to train the neural network model based on the training data in the first training data subset obtained by the obtaining module 11, to obtain gradient information corresponding to the neural network model. In a possible implementation, the training module 12 includes a forward propagation module 121 and a back propagation module 122. The forward propagation module 121 is configured to train the training data in the first training data subset, for example, input all the training data in the first training data subset obtained by the obtaining module 11 to the to-be-trained neural network model, then sequentially calculate and store intermediate variables (including output values) in the model in an order from an input layer to an output layer of the to-be-trained neural network model, and obtain an output result at the output layer, to complete forward propagation. The back propagation module 122 is configured to optimize the neural network model, and sequentially calculate and store, in an order from the output layer to the input layer according to a chain rule in calculus, an intermediate variable and a parameter gradient that are of an objective function and that are related to each computing layer of the neural network model, and may further update a parameter value in each computing layer, to complete back propagation.

In embodiments of this application, the gradient information corresponding to the neural network model may be described from different aspects. From a perspective of data, the gradient information may be a gradient value, or may be a value obtained by processing a gradient value. From a perspective of the training data, the gradient information corresponding to the neural network model includes gradient information for each piece of training data in the first training data subset, or may include gradient information for all the training data in the first training data subset. From a perspective of the neural network model, the gradient information corresponding to the neural network model includes gradient information that corresponds to the neural network model and that is obtained by processing gradient information for all the computing layers of the neural network model, or may include gradient information for a computing layer of the neural network model, or may include gradient information for several computing layers of the neural network model.

The evaluation module 13 is configured to evaluate the training data in the first training data subset based on the gradient information that corresponds to the neural network model and that is output by the training module 12, to obtain an evaluation result. Impact of the training data on training convergence of the to-be-trained neural network model is evaluated by using the gradient information, and further, the evaluation result of the training data is determined based on the impact of the training data on the training convergence of the to-be-trained neural network model. The evaluation result may be an evaluation result for each piece of training data in the first training data subset, or may be an evaluation result for the first training data subset, that is, an evaluation result for all the training data in the first training data subset by using all the training data in the first training data set as a whole.

The evaluation result includes an effect of the training data on model training, and/or a manner of processing the training data in a next training round. Effects of the training data on the model training include: "invalid", "inefficient", "efficient", and "indeterminate". "Invalid" indicates that a contribution provided by the training data to training precision to be achieved by the model training is 0. "Inefficient" indicates that a contribution provided by the training data to training precision to be achieved by the model training reaches a first contribution degree. "Efficient" indicates that a contribution provided by the training data to training precision to be achieved by the model training reaches a second contribution degree, and the second contribution degree is greater than a first contribution degree. It may be understood that if the effect of the training data on the model training is "efficient", compared with "inefficient", "efficient" means that a greater contribution is provided to the training precision to be achieved by the model training. "Indeterminate" indicates that a contribution provided by the training data to training precision to be achieved by the model training is indeterminate. The manner of processing the training data in the next training round includes: deleting the training data, decreasing a weight of the training data, increasing a weight of the training data, or retaining the training data.

The adjustment module 14 is configured to adjust the index table based on the evaluation result output by the evaluation module 13, where an adjusted index table is used to obtain a second training data subset in an (n+1)^{th} round. The adjusting the index table based on the evaluation result includes: deleting, based on the evaluation result, an index record that is in the index table and that is related to the training data; or increasing a quantity of index records of the training data in the index table based on the evaluation result; or decreasing a quantity of index records of the training data in the index table based on the evaluation result; or retaining an index record of the training data in the index table based on the evaluation result. If an index record in the adjusted index table changes compared with an index record in the index table that is not adjusted, the model training apparatus 100 reads the second training data subset from the training data set in the (n+1)^{th} round based on the adjusted index table.

To be specific, in a process of training the neural network model, the model training apparatus 100 evaluates the training data based on the gradient information for the neural network model that is obtained in each iteration process, and adjusts the index table based on the evaluation result, to obtain the adjusted index table after an n^{th} round ends. The index record in the adjusted index table changes, and a status in which the training data is read based on the adjusted index table in the (n+1)^{th} round also changes. For example, some training data is no longer read in the (n+1)^{th} round, some training data can still be read in the (n+1)^{th} round, some training data is read more times in the (n+1)^{th} round than in the n^{th} round, and some training data is read fewer times in the (n+1)^{th} round than in the n^{th} round.

Optionally, the model training apparatus 100 may further include a storage module 15. The storage module 15 stores a preset evaluation rule, and may provide the preset evaluation rule for the evaluation module 13. That is, the evaluation module 13 may obtain the evaluation rule from the storage module 15. The evaluation module 13 evaluates the training data in the first training data subset based on the gradient information corresponding to the neural network model and the preset evaluation rule, to obtain the evaluation result. In a possible implementation, the storage module 15 may be implemented as a rule library. The rule library stores the preset evaluation rule. The preset evaluation rule is set based on experience, and different to-be-trained neural networks correspond to different preset evaluation rules. The storage module 15 may be disposed on a local device, or may be disposed on another device or apparatus, for example, may be disposed in a database of the local device.

Optionally, the model training apparatus 100 may further include a rule update module 16. The rule update module 16 is configured to update the preset evaluation rule stored in the storage module 15. The model training apparatus 100 obtains the evaluation result in the evaluation module, and determines a preset target value based on the evaluation result. The model training apparatus 100 further obtains a test result, and updates the preset evaluation rule based on the test result and the preset target value.

Optionally, the model training apparatus 100 may further include a configuration module 17. The configuration module 17 is configured to: before the model training apparatus performs iterative training on the to-be-trained neural network model, receive configuration information for the model training that is configured by the user through an interface, where the configuration information includes dynamic training information that is selected by the user through the interface, and the configuration information further includes one or more of the following information: information about the neural network model, information about the training data set, a running parameter for the model training, and computing resource information for the model training. The configuration module 17 sends related configuration information to the training module 12, and the training module 12 performs training based on related parameter information.

In addition, in some possible cases, some of the plurality of modules included in the model training apparatus 100 may be combined into one module. For example, the training module 12 and the evaluation module 13 may be combined into a training module, that is, the training module integrates functions of the training module 12 and the evaluation module 13. The evaluation module 13 and the adjustment module 14 may be combined into an evaluation module, that is, the evaluation module integrates functions of the evaluation module 13 and the adjustment module 14.

In embodiments of this application, the model training apparatus 100 described above may be flexibly deployed. For example, the model training apparatus 100 may be deployed in a cloud environment. The cloud environment is an entity that uses a basic resource to provide a cloud service for the user in a cloud computing mode. The cloud environment includes a cloud data center and a cloud service platform.

The cloud data center includes a large quantity of basic resources (including computing resources, storage resources, and network resources) owned by a cloud service provider. The computing resources included in the cloud data center may be a large quantity of computing devices (for example, servers). The model training apparatus 100 may be a software apparatus deployed on a server, a virtual machine, or a container in the cloud data center. The software apparatus may be configured to train an AI model. The software apparatus may be deployed on a plurality of servers in a distributed manner, or deployed on a plurality of virtual machines in a distributed manner, or deployed on a virtual machine and a server in a distributed manner.

It should be noted that an appropriate training environment needs to be deployed when the neural network model is trained. The model training apparatus 100 is an apparatus configured to train an AI model. Herein, for ease of differentiation, the model training apparatus 100 and an environment deployment apparatus 200 are independent of each other. During actual deployment, the model training apparatus 100 may alternatively be directly used as a part of the environment deployment apparatus 200. The environment deployment apparatus 200 is configured to deploy a model training environment, including hardware and software deployment, so that the model training apparatus 100 can be run in the model training environment.

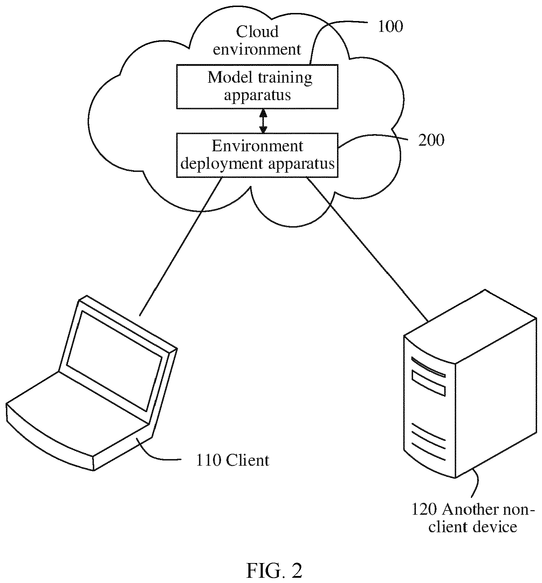

For example, as shown in FIG. 2, the environment deployment apparatus 200 and the model training apparatus 100 are deployed in a cloud environment, the environment deployment apparatus 200 deploys a model training environment, and the model training apparatus 100 trains the neural network model in the deployed model training environment. A client 110 may send, to the environment deployment apparatus 200, a training algorithm corresponding to a to-be-trained neural network model uploaded by the user, or another non-client device 120 may send, to the environment deployment apparatus 200, a training algorithm corresponding to a to-be-trained neural network model generated or stored by the another non-client device 120. After receiving the training algorithm corresponding to the to-be-trained neural network model, the environment deployment apparatus 200 invokes the model training apparatus 100 to optimize a training process of the to-be-trained neural network model, to improve training efficiency and reduce training duration. The model training apparatus 100 feeds back the trained neural network model to the client 110 or the another non-client device 120.

It may be understood that, in a scenario, the training environment of the neural network model may have been deployed, and the model training apparatus 100 directly trains the to-be-trained neural network model in the deployed training environment.

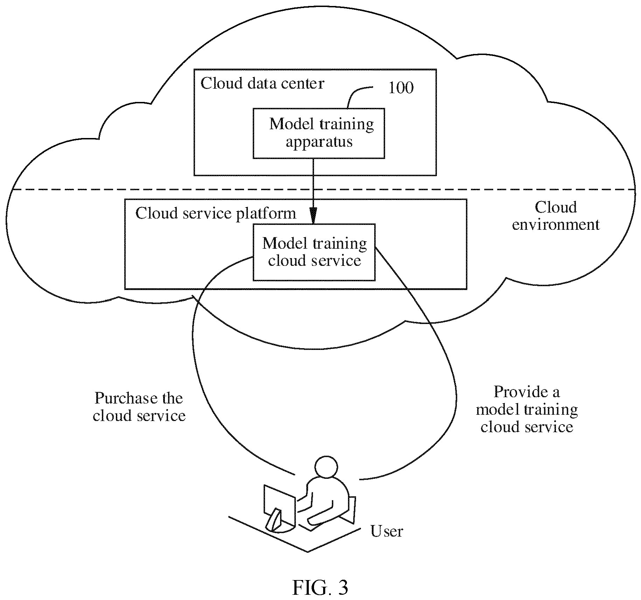

For example, FIG. 3 is a schematic diagram of application of the model training apparatus 100 in this application. As shown in FIG. 3, the model training apparatus 100 may be deployed in a cloud data center by a cloud service provider, and the cloud service provider abstracts a function provided by the model training apparatus 100 into a cloud service. A cloud service platform allows a user to consult and purchase the cloud service. After purchasing the cloud service, the user may use a model training service provided by the model training apparatus 100 in the cloud data center. Alternatively, the model training apparatus may be deployed by a tenant in a computing resource of a cloud data center leased by the tenant. The tenant purchases, by using a cloud service platform, a computing resource cloud service provided by a cloud service provider, and runs the model training apparatus 100 in the purchased computing resource, so that the model training apparatus 100 optimizes an AI model training process.

Optionally, the model training apparatus 100 may alternatively be a software apparatus run on an edge computing device in an edge environment, or one or more edge computing devices in the edge environment. The edge environment is a device set that includes one or more edge computing devices in an application scenario. The one or more edge computing devices may be computing devices in one data center or computing devices in a plurality of data centers. When the model training apparatus 100 is a software apparatus, the model training apparatus 100 may be deployed on a plurality of edge computing devices in a distributed manner, or may be deployed on one edge computing device in a centralized manner. For example, as shown in FIG. 4, the model training apparatus 100 is deployed in a distributed manner in an edge computing device 130 included in a data center of an enterprise, and an enterprise client 140 may send a to-be-trained neural network model to the edge computing device 130 for training. Optionally, the enterprise client 140 may further send a training data set to the edge computing device 130. Training is performed via the model training apparatus 100 in the edge computing device 130, and a trained neural network model is fed back to the enterprise client 140.

When the model training apparatus is a hardware device, the model training apparatus may be a computing device in any environment, for example, may be the edge computing device described above, or may be the computing device in the cloud environment described above. FIG. 5 is a schematic diagram of a structure of the computing device 500 according to an embodiment of this application. The computing device 500 includes a processor 501, a communication bus 502, a memory 503, and at least one communication interface 504.

The processor 501 may be a general-purpose central processing unit (Central Processing Unit, CPU), an application-specific integrated circuit (application-specific integrated circuit, ASIC), a graphics processing unit (graphics processing unit, GPU), or any combination thereof. The processor 501 may include one or more chips, for example, an Ascend chip. The processor 501 may include an AI accelerator, for example, a neural network processing unit (neural network processing unit, NPU).

The communication bus 502 may include a path for transferring information between components (for example, the processor 501, the memory 503, and the communication interface 504) of the computing device 500.

The memory 503 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium capable of carrying or storing expected program code in an instruction form or a data structure form and capable of being accessed by a computer. However, the memory 503 is not limited thereto. The memory 503 may exist independently, and is connected to the processor 501 through the communication bus 502. The memory 503 may alternatively be integrated with the processor 501. The memory 503 may store computer instructions. When the computer instructions stored in the memory 503 are executed by the processor 501, the model training method in this application may be implemented. In addition, the memory 503 may further store data required by the processor in a process of performing the foregoing method, and intermediate data and/or result data generated by the processor.

The communication interface 504 is any apparatus such as a transceiver, and is configured to communicate with another device or a communication network, for example, an Ethernet, a radio access network (RAN), or a wireless local area network (Wireless Local Area Network, WLAN).

In a specific implementation, in an embodiment, the processor 501 may include one or more CPUs.

In a specific implementation, in an embodiment, the computer device may include a plurality of processors. Each of the processors may be a single-core processor (single-CPU), or may be a multi-core processor (multi-CPU). The processor herein may be one or more devices, circuits, and/or processing cores configured to process data (for example, computer program instructions).

The following describes the model training method provided in embodiments of this application.

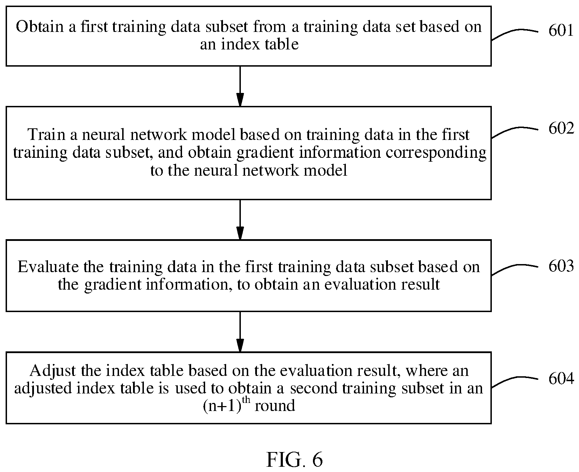

FIG. 6 is a schematic flowchart of a model training method according to an embodiment of this application. The model training method may be performed by the foregoing model training apparatus, to train a to-be-trained neural network model. Refer to FIG. 6. In an n^{th} training round, where n is a positive integer, the method includes the following steps.

Step 601: Obtain a first training data subset from a training data set based on an index table.

It should be noted that, in a training process of the to-be-trained neural network model, a process in which all training data in the training data set is trained once is referred to as one round (Epoch). To be specific, for each piece of training data in the training data set, one time of forward propagation and one time of back propagation are performed on the training data in the to-be-trained neural network model. A quantity of rounds is a hyperparameter that defines a quantity of times that the to-be-trained neural network model operates in the training data set. One round includes a plurality of iterations (Iterations), and the iteration is to train a part of the training data in the training data set once, to be specific, perform one time of forward propagation and one time of back propagation on the part of the data in the training data set in the to-be-trained neural network model. A batch (Batch) is a part of data sent to the to-be-trained neural network model. A batch size (Batch size) is a hyperparameter used to define a quantity of training data to be trained before a parameter of the to-be-trained neural network model is updated.

In this embodiment of this application, the to-be-trained neural network model may be obtained first. The to-be-trained neural network model may be uploaded by a user in a form of code. In other words, the model training apparatus may receive the to-be-trained neural network model in the form of code that is uploaded by the user. Alternatively, the to-be-trained neural network model may be obtained by the model training apparatus from another device based on a specified storage path; or the to-be-trained neural network model may be stored in another device and sent by the another device to the model training apparatus; or the to-be-trained neural network model may be obtained by the model training apparatus from the device based on a specified storage path.

In this embodiment of this application, the training data set is a set of training data used to train the to-be-trained neural network model, and the training data set may be uploaded by the user. Alternatively, the training data set may be obtained by the model training apparatus from another device based on a specified storage path; or the training data set may be stored in another device and sent by the another device to the model training apparatus; or the training data set may be obtained by the model training apparatus from the device based on a specified storage path. For example, the training data set may be pre-stored in a local database of the device, and when the training data needs to be obtained, the training data may be obtained from the local database. The training data set may be pre-stored in a database of another device, and when the training data needs to be obtained, the training data may be obtained from the database of the another device. Alternatively, when the training data needs to be obtained, the training data may be obtained from a device that generates the training data set. The training data set is a set of training data, and the training data in the training data set may be distributed in different devices.

In this embodiment of this application, the index table is used to search for the training data in the training dataset. For example, an index table is created for a training data set, an index record is created in the index table for each piece of training data in the training data set, and corresponding training data may be found based on the index record. The index record may include a storage address (for example, a pointer pointing to the storage address) of the training data in a memory, and the index record may further include all or a part of the training data. The index record may exist in a form of a file name, and the corresponding training data or the storage address of the training data is found by using the file name in the index table. Therefore, training data having an index record in the index table has an opportunity to be read and used for training. It may be understood that a structure of the index table may further include another part or be in another form. This is not specifically limited in this application.

In this embodiment of this application, a storage location of training data in the training data set is obtained based on an index record in the index table, and the corresponding training data is obtained based on the storage location, that is, the first training data subset is obtained. The first training data subset includes one or more pieces of training data, and a quantity of training data in the first training data subset may be determined based on a batch size. That is, the quantity of training data in the first training data subset is the same as the batch size. It may be understood that the n^{th} round includes j iterations, j is a positive integer, and training data used for an i^{th} time of iterative training is training data in the first training data subset. In this case, j first training data subsets are included.

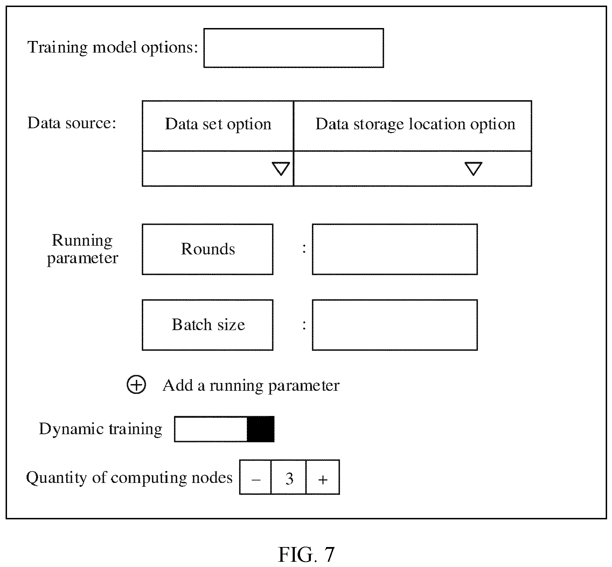

In a possible implementation, as shown in FIG. 7, the model training apparatus may provide a configuration interface for the user. The configuration interface may include a dynamic training option, a training model option, a data set option, a data storage location option, a running parameter, and a quantity of computing nodes. The user taps the dynamic training option, to start model training by using the model training method provided in this embodiment of this application. The model training apparatus performs the model training method provided in this embodiment of this application, and optimizes the training process of the to-be-trained neural network model. The user may enter a storage path of the to-be-trained neural network model in the training model option, and the model training apparatus may obtain the to-be-trained neural network model based on the storage path. When the training data set for training the neural network model is selected, a data source includes a data set and a data storage location. The user may select a data set based on a data set or a data storage location. The user may enter a data set name directory in the data set option. The model training apparatus may obtain a corresponding data storage location through mapping based on the data set name directory, and obtain the training data set from the mapped data storage location. The user may enter a data set storage location in the data storage location option, and obtain the training data set based on the data set storage location. The user may set a quantity of rounds in the running parameter "Rounds", that is, set the quantity of times that the to-be-trained neural network model operates in the training data set. For example, if the quantity is set to 50, the model training apparatus needs to perform 50 training rounds, and in each round, training data needs to be read from the training data set based on the corresponding index table. The user may set a batch size in the running parameter "Batch Size". For example, if the batch size is 50, 50 pieces of training data are read in each iteration. Another running parameter may be added to the configuration interface. The user may set the quantity of computing nodes. For example, if the quantity of computing nodes is set to 3, three computing devices train the neural network model.

For example, the user enters the to-be-trained neural network model and the training data set on the configuration interface, there are 20000 pieces of training data in the training data set, and the user sets the batch size to 500. In this case, a quantity of iterations that need to be performed in one round may be calculated as 40. If the user sets the quantity of rounds to 50, 50 training rounds need to be performed. The 1^{st} iteration of the 1^{st} round is used for description. The model training apparatus reads 500 pieces of training data from the memory based on the index record in the index table, to obtain the first training data subset, inputs the 500 pieces of training data into the to-be-trained neural network model for forward propagation and back propagation, and updates a parameter of the to-be-trained neural network model, to perform 40 iterations to complete training of the 20000 pieces of training data, that is, perform one training round. It may be understood that index records in the index table are sequentially arranged, and each piece of training data is searched for in an order of the index records. In one round, training data corresponding to each index record in the index table is read once.

Step 602: Train the neural network model based on the training data in the first training data subset, and obtain gradient information corresponding to the neural network model.

In this embodiment of this application, the training data in the first training data subset is input into the to-be-trained neural network model, and the neural network model is trained, that is, forward propagation and back propagation are performed, and the gradient information corresponding to the neural network model is obtained.

In this embodiment of this application, all the training data in the first training data subset is input into the to-be-trained neural network model, intermediate variables (including output values) in the model are sequentially calculated and stored in an order from an input layer to an output layer of the to-be-trained neural network model, and an output result is obtained at the output layer, to complete forward propagation. Then, an intermediate variable and a parameter gradient that are of an objective function and that are related to each computing layer of the neural network model are sequentially calculated and stored in an order from the output layer to the input layer according to a chain rule in calculus, that is, the output result of the forward propagation is substituted into a loss function, and a gradient descent algorithm is used to obtain an optimal solution. For each gradient descent, a BP algorithm is used to update the parameter value in each computing layer, to complete back propagation. During back propagation, gradient information for each computing layer of the neural network model may be sequentially calculated.

In this embodiment of this application, the gradient information may include a gradient value, or may include a value, for example, a weight, obtained by processing the gradient value.

In a possible implementation, the gradient information corresponding to the neural network model includes gradient information for each piece of training data in the first training data subset. In other words, during back propagation, gradient information for each piece of training data that is input into the neural network model is obtained. For example, the first training data subset includes h pieces of training data, and the gradient information corresponding to the neural network model includes h pieces of gradient information corresponding to the h pieces of training data.

In a possible implementation, the gradient information corresponding to the neural network model includes gradient information for the first training data subset, that is, gradient information for all the training data in the first training data subset. For example, a gradient value corresponding to each piece of training data in the first training data subset is processed to obtain the gradient information corresponding to the neural network model, and the gradient value corresponding to each piece of training data is added to obtain the gradient information corresponding to the neural network model.

In a possible implementation, the gradient information for all the computing layers of the neural network model is processed to obtain the gradient information corresponding to the neural network model. The gradient information corresponding to the neural network model may alternatively include gradient information for a computing layer of the neural network model, or may include gradient information for several computing layers of the neural network model.

For example, in a back propagation process, the gradient information for each computing layer is sequentially calculated in the order from the output layer to the input layer. The gradient information for each computing layer is recorded, and the gradient information for all the layers of the neural network model is processed to obtain the gradient information corresponding to the neural network model. Alternatively, only gradient information for a computing layer as the output layer may be recorded, and the gradient information for the computing layer as the output layer is used as the gradient information corresponding to the neural network model. Alternatively, gradient information for several computing layers may be sequentially recorded in the order from the output layer to the input layer, and the gradient information for the several computing layers is used as the gradient information corresponding to the neural network model.

Step 603: Evaluate the training data in the first training data subset based on the gradient information corresponding to the neural network model, to obtain an evaluation result.

In this embodiment of this application, impact of the training data on training convergence of the to-be-trained neural network model is evaluated by using the gradient information, and further, the evaluation result of the training data is determined based on the impact of the training data on the training convergence of the to-be-trained neural network model. In this embodiment of this application, the evaluation result may be an evaluation result for each piece of training data in the first training data subset, or may be an evaluation result for the first training data subset, that is, the first training data subset is used as a whole, and impact of the first training data subset on the training convergence of the to-be-trained neural network model is determined. In a possible implementation, the evaluation result includes an effect of the training data on model training, and/or a manner of processing the training data in a next training round.

The effect of the training data on the model training is impact of the training data on a model convergence result. The effect of the training data on the model training may include impact of the training data on a loss value decrease, impact of the training data on precision improvement, or impact of the training data on accuracy improvement. The effect of the training data on the model training may be understood as a contribution that can be provided by the training data to training precision that needs to be achieved by the model training. The gradient information of the neural network model is obtained by training the model by using the training data, and processing of the training data is directly evaluated based on the gradient information, to obtain the manner of processing the training data in the next training round, so as to adjust the training data set. In this way, the model achieves a training objective with low computing power and low time costs, training duration and computing power consumption for training are reduced, and model training efficiency is improved.

In a possible implementation, the effect of the training data on the model training includes: "invalid", where "invalid" indicates that the contribution provided by the training data to the training precision to be achieved by the model training is 0; "inefficient", where "inefficient" indicates that the contribution provided by the training data to the training precision to be achieved by the model training reaches a first contribution degree; "efficient", where "efficient" indicates that the contribution provided by the training data to the training precision to be achieved by the model training reaches a second contribution degree, and the second contribution degree is greater than a first contribution degree; or "indeterminate", where "indeterminate" indicates that the contribution provided by the training data to the training precision to be achieved by the model training is indeterminate.

"Invalid" may be understood as that the training data has no impact on the loss value decrease, or has no impact on the precision improvement, or has no impact on the accuracy improvement. "Inefficient" may be understood as that the training data has little impact on the loss value decrease, or has little impact on the precision improvement, or has little impact on the accuracy improvement. "Efficient" may be understood as that the training data has great impact on the loss value decrease, or has great impact on the precision improvement, or has great impact on the accuracy improvement. "Indeterminate" may be understood as that the training data has indeterminate impact on the loss value decrease, or has indeterminate impact on the precision improvement, or has indeterminate impact on the accuracy improvement.

In this embodiment of this application, a measurement of a contribution of each piece of training data to an overall learning and training process may be increased. For example, a proportion of a decrease in a loss value that is caused by a piece of training data in the model training process to a decrease in a loss value that is caused by all the training data may be counted, to measure the contribution of each piece of training data. A higher proportion indicates a greater contribution. Gradient information corresponding to a piece of training data may be calculated, and impact of the training data on the model training convergence may be determined based on the gradient information, to determine a contribution of the training data.

In a possible implementation, the manner of processing the training data in the next training round includes: deleting the training data, decreasing a weight of the training data, increasing a weight of the training data, or retaining the training data.

The deleting the training data means that the deleted training data is no longer used for training in the next training round. The decreasing a weight of the training data means that a quantity of times that the training data is used for training in the next training round is decreased. The increasing a weight of the training data means that a quantity of times that the training data is used for training in the next training round is increased. The retaining the training data means that the training data is still used for training in the next training round.

In a possible implementation, a preset evaluation rule may be formulated. For example, the preset evaluation rule is formulated based on the impact of the training data on the training convergence of the to-be-trained neural network model. The training data in the first training data subset may be evaluated based on the preset evaluation rule and the gradient information corresponding to the neural network model, to obtain the evaluation result.

In this embodiment of this application, the preset evaluation rule may be stored in a rule library. When the user taps the dynamic training option to start training of the neural network model, the model training apparatus obtains the preset evaluation rule from the rule library.

In a possible implementation, the preset evaluation rule includes a determining condition and a corresponding evaluation result when the determining condition is met. When the gradient information meets a specific gradient information determining condition, a corresponding evaluation result is obtained based on the met determining condition.

Further, the preset evaluation rule includes a relationship between a determining condition corresponding to each preset threshold and each evaluation result. When a value of the gradient information meets a determining condition corresponding to a preset threshold, a corresponding evaluation result is obtained based on the met determining condition.

For example, when the value of the gradient information is equal to a first threshold, the evaluation result is that the training data is to be deleted. For example, when a gradient value of a piece of training data is equal to 0, or a gradient value of the first training data subset is equal to 0, an obtained evaluation result of the training data or all the training data in the first training data subset is that the training data is to be deleted.

In this embodiment of this application, the gradient value of the first training data subset is a gradient value obtained by processing gradient values corresponding to all the training data in the first training data subset, for example, a gradient value obtained by adding the gradient values of all the training data through weighting.

For example, when the value of the gradient information meets a determining condition corresponding to a second threshold, the evaluation result corresponding to the training data is that the training data is to be deleted or a weight of the training data is to be decreased. For example, when a gradient value of a piece of training data is less than the second threshold, or a gradient value of the first training data subset is less than the second threshold, an obtained evaluation result of the training data or all the training data in the first training data subset is that the training data is to be deleted, or an obtained evaluation result of the training data or all the training data in the first training data subset is that a weight of the training data is to be decreased.

For example, when the value of the gradient information meets a determining condition corresponding to a third threshold, the evaluation result corresponding to the training data is that a weight of the training data is to be increased. For example, when a gradient value of a piece of training data is greater than the third threshold, or a gradient value of the first training data subset is greater than the third threshold, an obtained evaluation result of the training data or all the training data in the first training data subset is that a weight of the training data is to be increased.

For example, when the value of the gradient information meets a determining condition corresponding to a fourth threshold, the evaluation result corresponding to the training data is that the training data is to be deleted or the training data is to be retained. For example, when a gradient value of a piece of training data is less than the fourth threshold, or a gradient value of the first training data subset is less than the fourth threshold, an obtained evaluation result of the training data or all the training data in the first training data subset is that the training data is to be deleted, or an obtained evaluation result of the training data or all the training data in the first training data subset is that the training data is to be retained. In a possible implementation, the preset evaluation rule may include a first rule, and the first rule is used to evaluate the effect of the training data on the model training, and determine an attribute of the training data.

Further, the first rule includes a relationship between the determining condition corresponding to each preset threshold and the effect of the training data on the model training, or the first rule includes a relationship between a type of each neural network model and the determining condition corresponding to each preset threshold, and a relationship between the determining condition corresponding to each preset threshold and the effect of the training data on the model training.

For example, when the value of the gradient information is equal to a fifth threshold, for example, when a gradient value of a piece of training data is equal to 0, or a gradient value of the first training data subset is equal to 0, an effect of the training data or all the training data in the first training data subset on the model training is obtained as "invalid", and an attribute of the training data is invalid data, or an attribute of all the training data in the first training data subset is invalid data.

For example, when the value of the gradient information meets a determining condition corresponding to a sixth threshold, an attribute of the training data is inefficient data. For example, when a gradient value of a piece of training data is less than the sixth threshold, or a gradient value of the first training data subset is less than the sixth threshold, an effect of the training data or all the training data in the first training data subset on the model training is obtained as "inefficient", and an attribute of the training data is inefficient data, or an attribute of all the training data in the first training data subset is inefficient data.

For example, when the value of the gradient information meets a determining condition corresponding to a seventh threshold, an attribute of the training data is efficient data. For example, when a gradient value of a piece of training data is greater than the seventh threshold, or a gradient value of the first training data subset is greater than the seventh threshold, an effect of the training data or all the training data in the first training data subset on the model training is obtained as "efficient", and an attribute of the training data is efficient data, or an attribute of all the training data in the first training data subset is efficient data.

For example, when the value of the gradient information meets a determining condition corresponding to an eighth threshold, an attribute of the training data is indeterminate data. For example, when a gradient value of a piece of training data is equal to the eighth threshold, or a gradient value of the first training data subset is equal to the eighth threshold, an effect of the training data or all the training data in the first training data subset on the model training is obtained as "indeterminate", and an attribute of the training data is indeterminate data, or an attribute of all the training data in the first training data subset is indeterminate data.

In a possible implementation, a loss value of the to-be-trained neural network model is obtained based on the training data, and when the loss value meets a determining condition corresponding to a ninth preset threshold, an effect of the training data or all the training data in the first training data subset on the model training is obtained as "indeterminate". For example, when a gradient value of a piece of training data is greater than the ninth threshold, or a gradient value of the first training data subset is greater than the ninth threshold, the training data is indeterminate data, or all the training data in the first training data subset is indeterminate data, and an effect of the training data or all the training data in the first training data subset on the model training is obtained as "indeterminate". Indeterminate data is data that causes an increase in a loss value during calculation.

In a possible implementation, the preset evaluation rule may further include a second rule, and the second rule is used to determine, based on the effect of the training data on the model training, the manner of processing the training data in the next training round.

Further, the second rule includes a relationship between the effect of the training data on the model training and the manner of processing the training data in the next training round, or the second rule includes a relationship between a type of each neural network model and the effect of the training data on the model training, and a relationship between the effect of the training data on the model training and the manner of processing the training data in the next training round.

In this embodiment of this application, the effect of the training data on the model training is obtained based on the first rule and the gradient information, or the manner of processing the training data in the next training round is obtained based on the effect of the training data on the model training and the second rule.

For example, when the effect of the training data on the model training is "invalid", the manner of processing the training data in the next training round is deleting the training data.

For example, when the effect of the training data on the model training is "inefficient", the manner of processing the training data in the next training round is deleting the training data or decreasing a weight of the training data.

For example, when the effect of the training data on the model training is "efficient", the manner of processing the training data in the next training round is increasing a weight of the training data.

For example, when the effect of the training data on the model training is "indeterminate", the manner of processing the training data in the next training round is deleting the training data or retaining the training data.

It may be understood that the first threshold to the ninth threshold, the determining condition for each threshold, and the corresponding evaluation result may be set based on actual experience. This is not specifically limited in the implementation of this application.

In this embodiment of this application, the first threshold to the fourth threshold, the determining condition for each threshold, and the evaluation result may be correspondingly set based on different neural network models. To be specific, values of the first threshold to the fourth threshold for the different neural network models may be different, and the determining condition corresponding to each threshold are and the evaluation result also different, and may be specifically set based on actual experience. Similarly, the fifth threshold to the ninth threshold, the determining condition for each threshold, a setting of the effect of the training data on the model training, and the manner of processing the training data in the next training round may be correspondingly set based on different neural network models. To be specific, values of the fifth threshold to the ninth threshold for the different neural network models may be different, and the determining condition corresponding to each threshold and the evaluation result may also be different, and may be specifically set based on actual experience. This is not specifically limited in the context of this application.

Step 604: Adjust the index table based on the evaluation result, where an adjusted index table is used to obtain a second training data subset in an (n+1)^{th} round.

In this embodiment of this application, the adjusting the index table includes: deleting an index record that is in the index table and that is related to the training data; or increasing a quantity of index records of the training data in the index table; or decreasing a quantity of index records of the training data in the index table; or retaining an index record of the training data in the index table.

In this embodiment of this application, when the effect of the training data on the model training is "invalid" or "inefficient", the adjusting the index table is: deleting the index record that is the index table and that is related to the training data. When the effect of the training data on the model training is "inefficient", the adjusting the index table may alternatively be: decreasing the quantity of index records of the training data in the index table. When the effect of the training data on the model training is "efficient", the adjusting the index table may alternatively be: increasing the quantity of index records of the training data in the index table. When the effect of the training data on the model training is retention, the adjusting the index table may be: retaining the index record of the training data in the index table.

In this embodiment of this application, when the manner of processing the training data in the next training round is deletion, the adjusting the index table is: deleting the index record that is the index table and that is related to the training data. When the manner of processing the training data in the next training round is weight decreasing, the adjusting the index table may alternatively be: decreasing the quantity of index records of the training data in the index table. When the manner of processing the training data in the next training round is weight increasing, the adjusting the index table may alternatively be: increasing the quantity of index records of the training data in the index table. When the manner of processing the training data in the next training round is retention, the adjusting the index table may be: retaining the index record of the training data in the index table.

In this embodiment of this application, the deleting an index record that is in the index table and that is related to the training data is: deleting index records corresponding to the training data or all the training data in the first training data subset from the index table, so that no index record corresponding to the training data or all the training data in the first training data subset exists in the adjusted index table.

In this embodiment of this application, the retaining an index record of the training data in the index table is: remaining a quantity of index records of the training data or all the training data in the training data subset unchanged in the index table.

In this embodiment of this application, the decreasing a quantity of index records of the training data in the index table is: decreasing a quantity of index records corresponding to the training data or all training data in the first training data subset in the index table, that is, decreasing a proportion of the index records corresponding to the training data in the index table. If training data A has two corresponding index records in the index table, or all training data in a first training data subset B has two corresponding index records in the index table, one of the index records is deleted. In this way, a quantity of times that the training data or all the training data in the first training data subset is read is decreased.

In this embodiment of this application, the increasing a quantity of index records of the training data in the index table is: increasing a quantity of index records corresponding to the training data or all training data in the first training data subset in the index table, that is, increasing a proportion of the index records corresponding to the training data in the index table. If training data A has two corresponding index records in the index table, or all training data in a first training data subset B has two corresponding index records in the index table, one index record is added. In this case, the training data A has three index records in the index table, or all the training data in the first training data subset B has three corresponding index records in the index table. In this way, a quantity of times that the training data or the training data in the first training data subset is read is increased.

It may be understood that the index record in the index table represents a quantity of times that the training data or all the training data in the first training data subset is read. If there are a plurality of index records of a piece of training data in the index table, the index record is read for a plurality of times in the round. If training data A has five index records in the index table, a quantity of times that the training data A is read for training in the round is 5. If a first training data subset B has five index records in the index table, a quantity of times that all training data in the first training data subset B is read for training in the round is 5.

In this embodiment of this application, in each iteration of the n^{th} round, the first training data subset is obtained from the training data set based on the index table; the neural network model is trained based on the training data in the first training data subset, and the gradient information corresponding to the neural network model is obtained; then the training data in the first training data subset is evaluated based on the gradient information corresponding to the neural network model, to obtain the evaluation result; and finally the index table is adjusted based on the evaluation result. After all iterative training is performed in the round, that is, the training round is completed, the adjusted index table is obtained. The adjusted index table is used to perform training in the (n+1)^{th} round, read a second training data subset based on the adjusted index table, and train the neural network model based on training data in the read second training data subset. In this way, the model achieves the training objective with low computing power and low time costs, the training duration and the computing power consumption for training are reduced, and the model training efficiency is improved.

It may be understood that if there are j iterations in the (n+1)^{th} round, there are j second training data subsets.

In this embodiment of this application, in each time of iterative training, training data that has positive impact on the training convergence of the to-be-trained neural network model is selected based on the preset evaluation rule, to dynamically adjust the training data set and remove invalid training data or inefficient training data, or decrease a proportion of inefficient training data in the index table, or increase a proportion of efficient training data in the index table, or increase a quantity of training data having great impact on a gradient descent, or decrease a quantity of training data having small impact on a gradient descent. On the premise of ensuring a training effect, a quantity of overall training data is decreased, to decrease a calculation amount in the training process, improve the training efficiency, and ensure efficiency of each iteration.

In this embodiment of this application, during back propagation, the gradient information for each computing layer of the neural network model may be sequentially obtained through calculation. Therefore, comprehensive processing may be performed on the gradient information for each computing layer of the neural network model to obtain final gradient information, impact of the training data or all the training data in the first training data subset on the training convergence is evaluated based on the gradient information, to obtain an evaluation result, and further, the index table is adjusted based on the evaluation result. Invalid training data is deleted from an adjusted index table, and a quantity of times that the training data in the training data set is read is decreased, to decrease the calculation amount in the training process and improve the training efficiency. In addition, in the adjusted index table, a quantity of indexes of inefficient training data is decreased, and a quantity of indexes of efficient training data is increased. In this way, the calculation amount in the training process is further decreased, the training efficiency is improved, and the efficiency of each iteration is ensured.

In a process of implementing this embodiment of this application, the inventor further finds that gradient information for the last computing layer of the neural network model includes most information about the impact of the training data or all the training data in the first training data subset on the training convergence. The last computing layer of the neural network model is the last layer for forward propagation and the first computing layer for back propagation. Therefore, instead of obtaining the gradient information for all the computing layers of the neural network model, in this application, the gradient information for the last computing layer is obtained, the training data or all the training data in the first training data subset is evaluated based on the gradient information for the last computing layer, to obtain an evaluation result, and further, the index table is adjusted based on the evaluation result. In this way, a quantity of times that gradient information for another computing layer is recorded and evaluated is decreased while a quantity of overall training data is decreased, the calculation amount in the training process is further decreased, and the training efficiency is improved.

In the process of implementing this embodiment of this application, the inventor further finds that gradient information for several computing layers may be recorded through decomposition of the to-be-trained neural network model, and the impact of the training data or all the training data in the first training data subset on the training convergence is evaluated based on the gradient information for the several computing layers, so that the training data can be processed in a more refined manner.

In this embodiment of this application, a key layer may be determined based on a type of the neural network model. The key layer affects the model training convergence, and gradient information for the key layer is obtained. For example, for a convolutional neural network model, it is determined that a convolutional layer of the convolutional neural network model is a key layer, and gradient information for the convolutional layer is sequentially recorded. For example, the convolutional layer is an (n-2)^{th} computing layer. In this case, according to the chain rule in calculus, gradient information for the (n-2)^{th} computing layer is calculated along the n^{th} computing layer to the (n-2)^{th} computing layer, and the gradient information for the (n-2)^{th} computing layer is recorded.

Specifically, the to-be-trained neural network model includes n computing layers, where n is a positive integer. An evaluation result of the training data or all the training data in the first training data subset at an i^{th} computing layer is sequentially recorded in an order from the n^{th} layer to the 1^{st} layer, where i is a positive integer greater than 0 and not greater than n. When the evaluation result of the training data or all the training data in the first training data subset at the i^{th} computing layer is "invalid" or deletion, recording an evaluation result of the training data or all the training data in the first training data subset at each remaining computing layer is stopped, to obtain an evaluation result corresponding to the neural network model in this iteration.

In this case, the adjusting the index table based on the evaluation result includes: adjusting, based on the evaluation result of the training data or all the training data in the first training data subset at each computing layer, an index record of training data used for back propagation in the index table.

In a possible implementation, when the evaluation result of the training data at the i^{th} computing layer includes that the effect of the training data on the model training is "invalid" or the manner of processing the training data in the next training round is deletion, the index record of the training data or all the training data in the first training data subset includes back propagation information, and the back propagation information is that a layer to which the training data or all the training data in the first training data subset can be back-propagated is the i^{th} layer. That is, it is recorded in the index table that the training data or all the training data in the first training data subset is used for back propagation to the i^{th} layer.

In a possible implementation, when the evaluation result of the training data at the i^{th} computing layer includes that the effect of the training data on the model training is "inefficient" or the manner of processing the training data in the next training round is decreasing the weight of the training data, the index record of the training data or all the training data in the first training data subset includes back propagation information, and the back propagation information is that a quantity of data that is in the training data or all the training data in the first training data subset and that can be back-propagated to the i^{th} layer is decreased. That is, a quantity of index records, in the index table, of the training data or all the training data in the first training data subset for back propagation to the i^{th} layer is decreased.

In a possible implementation, when the evaluation result of the training data at the i^{th} computing layer includes that the effect of the training data on the model training is "efficient" or the manner of processing the training data in the next training round is increasing the weight of the training data, the index record of the training data or all the training data in the first training data subset includes back propagation information, and the back propagation information is that a quantity of data that is in the training data or all the training data in the first training data subset and that can be back-propagated to the i^{th} layer is increased. That is, a quantity of index records, in the index table, of the training data or all the training data in the first training data subset for back propagation to the i^{th} layer is increased.

For example, one piece of training data is used for description. The training data is input into the to-be-trained neural network model to perform forward propagation and back propagation, and an evaluation result of the training data at each computing layer is recorded in the order from the n^{th} layer to the 1^{st} layer. For example, if it is recorded that an evaluation result of the training data at the n^{th} computing layer is that the effect of the training data on the model training is "efficient" or the manner of processing the training data in the next training round is increasing the weight of the training data, an evaluation result of the training data at an (n-1)^{th} computing layer is that the effect of the training data on the model training is "efficient" or the processing manner of the training data in the next training round is increasing the weight of the training data, and an evaluation result of the training data at the (n-2)^{th} computing layer is that the effect of the training data on the model training is "invalid" or the manner of processing the training data in the next training round is deleting the training data, recording evaluation results of the training data at an (n-3)^{th} computing layer to the 1^{st} computing layer is stopped. An obtained evaluation result corresponding to the neural network model in this iteration is as follows: The effect at the n^{th} computing layer is "efficient" or the weight of the training data is increased, the effect at the (n-1)^{th} computing layer is "efficient" or the weight of the training data is increased, and the effect at the (n-2)^{th} computing layer is "invalid" or the training data is deleted.

In this case, the adjusting the index table based on the evaluation result is: increasing a quantity of index records of the training data at the n^{th} computing layer in the index table, and increasing a weight that is recorded in the index table and that is of the index record of the training data at the (n-1)^{th} computing layer. If a quantity of index records of the training data at the n^{th} layer and the (n-1)^{th} computing layer is increased by 2, index records that are recorded in the index table and that are related to the training data at the (n-2)^{th} computing layer to the 1^{st} computing layer are deleted. That is, in the next round, the training data is read based on the index table, forward propagation is performed on the training data, and when back propagation is performed, only the n^{th} computing layer to the (n-1)^{th} computing layer are calculated, and only parameters of the n^{th} computing layer to the (n-1)^{th} computing layer are updated.

It may be understood that, similar to the first training data subset, forward propagation is performed on all the training data in the first training data subset, and when back propagation is performed, only the n^{th} computing layer to the (n-1)^{th} computing layer are calculated, and only the parameters of the n^{th} computing layer to the (n-1)^{th} computing layer are updated.

In this embodiment of this application, the training data is refined layer by layer based on a network structure of the neural network model. This further improves a filtering effect of the training data set. In the next round, back propagation control may be performed based on the adjusted index table. That is, for a piece of training data or a training data subset, it is determined, based on an evaluation result of the training data or the training data subset at a computing layer, that the training data or the training data subset is back-propagated to the corresponding computing layer, so that a calculation amount for back propagation is decreased, and parameter update can be more accurately controlled.

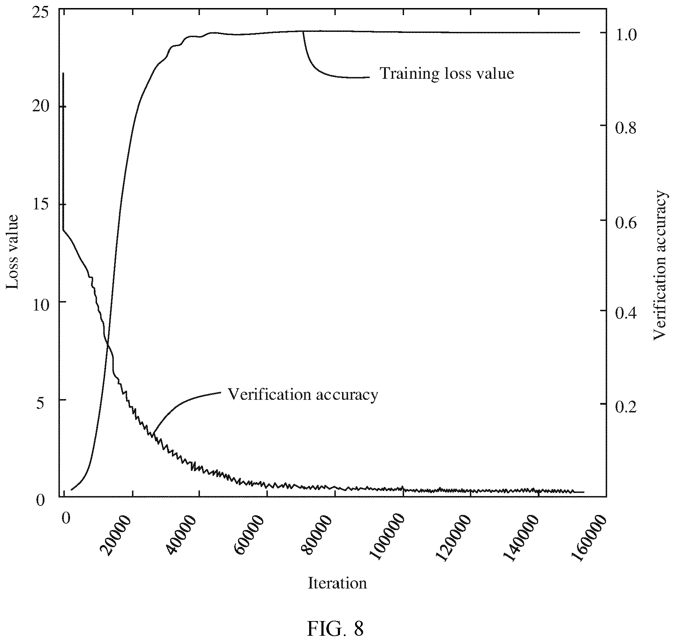

In the process of implementing this embodiment of this application, the inventor further finds that the model training is phased. Refer to FIG. 8. It can be learned from FIG. 8 that, in the training process of the neural network model, as a quantity of iterations increases, if a training loss value and verification accuracy (precision) change, the entire training process is phased. Therefore, when there are many preset evaluation rules in the rule library, a special preset evaluation rule may be formulated for each phase based on experience. For example, the preset evaluation rule may further include: before a first preset quantity of training times, an evaluation result of invalid data is that training data is to be deleted, and after the first preset quantity of training times, an evaluation result of the invalid data is that training data is retained. The preset phase rule further includes: restoring the index table into an initial index table after a second preset quantity of training times, where all the training data in the training data set may be read based on the initial index table.

For example, in an early stage of training, fewer removal operations are performed on the training data, and generalization is improved. In a later stage of training, a removal rate is increased and training time is reduced for invalid training data.

It may be understood that the first preset quantity of training times and the second preset quantity of training times may be quantities of iterative training times or quantities of training rounds, and the first preset quantity of training times and the second preset quantity of training times may be set based on the to-be-trained neural network model and with reference to experience.

The foregoing embodiment describes an implementation process of training the model. Optionally, in this embodiment of this application, the model training apparatus may further update the preset evaluation rule.

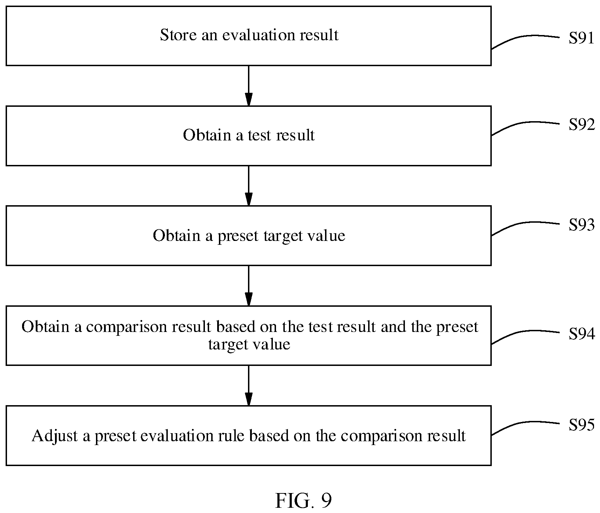

For example, FIG. 9 shows a flowchart of updating the preset evaluation rule. The process includes the following steps.

Step S91: Store the evaluation result.

In this embodiment of this application, after the training data in the first training data subset is evaluated based on the gradient information corresponding to the neural network model, to obtain the evaluation result, the index table is adjusted based on the evaluation result, and the evaluation result may be further stored in a storage module. The evaluation result of each iteration in each round is stored in the storage module.

Step S92: Obtain a test result.

In this embodiment of this application, the test result may be a preset loss value, or may be a preset precision value.

For example, after a preset quantity of training rounds are performed, a parameter of the neural network model is updated, and test data is input into an updated neural network model for testing, to obtain a test result of the test data. For example, it is preset that the test data is used for testing after five rounds. After the 5^{th} training round ends, the test data is input into the updated neural network model for forward propagation, a result is output at the output layer, and a loss value calculated by substituting the result into the loss function is the test result.

Step S93: Obtain a preset target value.

In this embodiment of this application, the preset target value may be a preset loss value, or may be a preset precision value.

In this embodiment of this application, after the preset quantity of training rounds are performed, the preset target value is set, and a degree to which a loss function value is to be decreased is determined. The preset target value is considered as a value that should be calculated by importing, into the loss function, a result obtained after the preset quantity of training rounds are performed on the to-be-trained neural network model, the parameter is updated, and the test data is input into the updated neural network model for training.

In this embodiment of this application, the preset target value may be set based on experience. The preset target value may alternatively be set based on the evaluation result and with reference to experience. For example, it may be learned, based on past experience, that an empirical target value corresponding to the index table is not updated, and the empirical target value is adjusted based on a ratio of a quantity of changed training data in the index table to a quantity of training data in the original index table in the evaluation result to obtain a new target value after the index table is updated. The new target value is the preset target value.

Step S94: Obtain a comparison result based on the test result and the preset target value.

It may be understood that, when the test result is a loss value, the preset target value is also a loss value; or when the test result is a precision value, the preset target value is also a precision value.

In this embodiment of this application, the test result is compared with the preset target value to obtain the comparison result. The comparison result includes that the test result is better than the preset target value, the test result is worse than the preset target value, or the test result matches the preset target value. That is, the comparison result further includes that the test result is greater than or equal to the preset target value, or that the test result is less than the preset target value.

Step S95: Adjust the preset evaluation rule based on the comparison result.

In this embodiment of this application, when the test result is better than the preset target value or the test result matches the preset target value, the preset evaluation rule is adjusted based on a positive feedback mechanism; or when the test result is worse than the preset target value, the preset evaluation rule is adjusted based on a negative feedback mechanism.

Specifically, when both the test result and the preset target value are loss values, and the test result is less than the preset target value, the preset evaluation rule is adjusted based on the negative feedback mechanism, that is, a degree of intervention of the preset evaluation rule in the training data is decreased. For example, decreasing a quantity of index records of the training data in the preset evaluation rule is adjusted to increasing the quantity of index records of the training data, increasing a quantity of index records of the training data in the preset evaluation rule is adjusted to decreasing the quantity of index records of the training data, retaining an index record of the training data in the preset evaluation rule is adjusted to deleting the index record of the training data, or deleting an index record of the training data in the preset evaluation rule is adjusted to retaining the index record of the training data. Alternatively, the setting of the first threshold to the ninth threshold is changed, the determining condition of each threshold is changed, and so on. When the test result is greater than or equal to the preset target value, the preset evaluation rule is adjusted based on the positive feedback mechanism. That is, for example, decreasing a quantity of index records of training data in the preset evaluation rule is adjusted to continuing decreasing the quantity of index records of the training data, increasing a quantity of index records of training data in the preset evaluation rule is adjusted to continuing increasing the quantity of training data, or deleting invalid training data in the preset evaluation rule is remained as deleting the invalid training data. Alternatively, the setting of the first threshold to the ninth threshold is changed, the determining condition of each threshold is changed, and so on.

Embodiments of this application further provide the model training apparatus 100 shown in FIG. 1. Modules included in the model training apparatus 100 and functions are described above, and details are not described herein again.

In some embodiments, the obtaining module 11 in the model training apparatus 100 is configured to perform step 61 in the foregoing embodiment. The training module 12 is configured to perform step 62 in the foregoing embodiment. The evaluation module 13 is configured to perform step 63 in the foregoing embodiment. The adjustment module 14 is configured to perform step 64 in the foregoing embodiment.

Optionally, the model training apparatus 100 may further include the storage module 15 and the rule update module 16. The rule update module 16 is configured to perform step 91 to step 95.

Embodiments of this application further provide the computing device 500 shown in FIG. 5. The processor 501 in the computing device 500 reads a set of computer instructions stored in the memory 503 to perform the foregoing model training method.

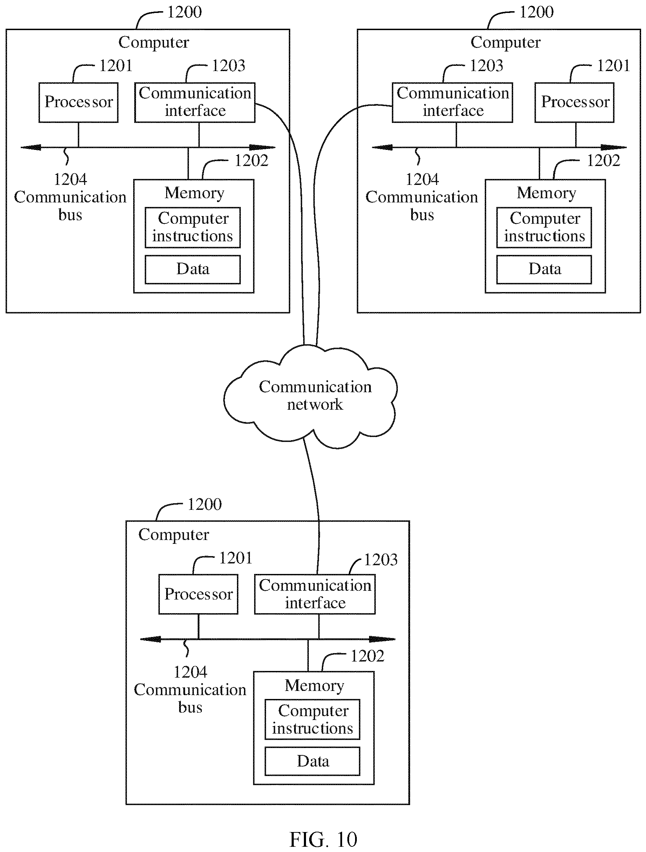

The modules in the model training apparatus 100 provided in embodiments of this application may be deployed on a plurality of computers in a same environment or in different environments in a distributed manner. Therefore, this application further provides a computing device (which may also be referred to as a computer system) shown in FIG. 10. The computer system includes a plurality of computers 1200. A structure of each computer 1200 is the same as or similar to the structure of the computing device 500 in FIG. 5. Details are not described herein again.

A communication path is established between the computers 1200 by using a communication network. Any one or more of the obtaining module 11, the training module 12, the evaluation module 13, the storage module 15, and the rule update module 16 is run on each computer 1200. Any computer 1200 may be a computer (for example, a server) in a cloud data center, an edge computer, or a terminal computing device.

The descriptions of the procedures corresponding to the foregoing accompanying drawings have respective focuses. For a part that is not described in detail in a procedure, refer to related descriptions of another procedure.

All or some of the foregoing embodiments may be implemented by software, hardware, firmware, or any combination thereof. When software is used to implement the embodiments, all or some of the embodiments may be implemented in a form of a computer program product. The computer program product for implementing model training includes one or more computer instructions for performing model training, and when these computer program instructions are loaded and executed on a computer, all or some of the procedures or the functions shown in FIG. 6 and FIG. 8 in embodiments of this application are generated; or all or some of the procedures or the functions shown in FIG. 9 in embodiments of this application are generated.

The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely embodiments of this application, but are not intended to limit this application. Any modification, equivalent replacement, or improvement made without departing from the spirit and principle of this application should fall within the protection scope of this application.

## Claims

1. A model training method, wherein the method is applied to a model training apparatus, the model training apparatus performs iterative training on a to-be-trained neural network model, the iterative training comprises N training rounds, and in an n^{th} training round, wherein N and n are positive integers and n is less than N, the method comprises:
obtaining a first training data subset from a training data set based on an index table;
training the neural network model based on training data in the first training data subset, and obtaining gradient information corresponding to the neural network model;
evaluating the training data in the first training data subset based on the gradient information, to obtain an evaluation result; and
adjusting the index table based on the evaluation result, wherein an adjusted index table is used to obtain a second training subset in an (n+1)^{th} round.

2. The method according to claim 1, wherein the evaluating the training data in the first training data subset based on the gradient information, to obtain an evaluation result comprises:
obtaining a preset evaluation rule; and
evaluating the training data in the first training data subset based on the preset evaluation rule and the gradient information, to obtain the evaluation result.

3. The method according to claim 1 or 2, wherein the evaluation result comprises an effect of the training data on model training, and/or a manner of processing the training data in a next training round.

4. The method according to claim 3, wherein the effect of the training data on the model training comprises: "invalid", wherein "invalid" indicates that a contribution provided by the training data to training precision to be achieved by the model training is 0;
"inefficient", wherein "inefficient" indicates that a contribution provided by the training data to training precision to be achieved by the model training reaches a first contribution degree;
"efficient", wherein "efficient" indicates that a contribution provided by the training data to training precision to be achieved by the model training reaches a second contribution degree, and the second contribution degree is greater than a first contribution degree; or
"indeterminate", wherein "indeterminate" indicates that a contribution provided by the training data to training precision to be achieved by the model training is indeterminate.

5. The method according to claim 3 or 4, wherein the manner of processing the training data in the next training round comprises:
deleting the training data, decreasing a weight of the training data, increasing a weight of the training data, or retaining the training data.

6. The method according to any one of claims 1 to 5, wherein the method further comprises:
testing the neural network model by using test data, to obtain a test result; and
updating the preset evaluation rule based on a preset target value and the test result.

7. The method according to claim 6, wherein the updating the preset evaluation rule based on a preset target value and the test result comprises:
when the test result reaches or is better than the preset target value, updating the preset evaluation rule based on a positive feedback mechanism; or
when the test result does not reach the preset target value, updating the preset evaluation rule based on a negative feedback mechanism.

8. The method according to any one of claims 1 to 7, wherein the neural network model comprises a plurality of computing layers; and
the obtaining gradient information corresponding to the neural network model comprises:
obtaining gradient information for at least one computing layer of the neural network model.

9. The method according to claim 8, wherein the neural network model comprises m computing layers, and m is a positive integer; and
the obtaining gradient information for at least one computing layer of the neural network model comprises:
obtaining gradient information for an m^{th} computing layer of the neural network model.

10. The method according to any one of claims 1 to 9, wherein before the model training apparatus performs iterative training on the to-be-trained neural network model, the method further comprises:
receiving configuration information for the model training that is configured by a user through an interface, wherein the configuration information comprises dynamic training information that is selected by the user through the interface, and
the configuration information further comprises one or more of the following information: information about the neural network model, information about the training data set, a running parameter for the model training, and computing resource information for the model training.

11. A model training apparatus, wherein the model training apparatus performs iterative training on a to-be-trained neural network model, the iterative training comprises N training rounds, and in an n^{th} training round, wherein N and n are positive integers and n is less than N, the apparatus comprises:
an obtaining module, configured to obtain a first training data subset from a training data set based on an index table;
a training module, configured to train the neural network model based on training data in the first training data subset, and obtain gradient information corresponding to the neural network model;
an evaluation module, configured to evaluate the training data in the first training data subset based on the gradient information, to obtain an evaluation result; and
an adjustment module, configured to adjust the index table based on the evaluation result, wherein an adjusted index table is used to obtain a second training subset in an (n+1)^{th} round.

12. The apparatus according to claim 11, wherein the evaluation module is specifically configured to:
obtain a preset evaluation rule; and
evaluate the training data in the first training data subset based on the preset evaluation rule and the gradient information, to obtain the evaluation result.

13. The apparatus according to claim 11 or 12, wherein the evaluation result comprises an effect of the training data on model training, and/or a manner of processing the training data in a next training round.

14. The apparatus according to claim 13, wherein the effect of the training data on the model training comprises:
"invalid", wherein "invalid" indicates that a contribution provided by the training data to training precision to be achieved by the model training is 0;
"inefficient", wherein "inefficient" indicates that a contribution provided by the training data to training precision to be achieved by the model training reaches a first contribution degree;
"efficient", wherein "efficient" indicates that a contribution provided by the training data to training precision to be achieved by the model training reaches a second contribution degree, and the second contribution degree is greater than a first contribution degree; or
"indeterminate", wherein "indeterminate" indicates that a contribution provided by the training data to training precision to be achieved by the model training is indeterminate.

15. The apparatus according to claim 13 or 14, wherein the manner of processing the training data in the next training round comprises:
deleting the training data, decreasing a weight of the training data, increasing a weight of the training data, or retaining the training data.

16. The apparatus according to any one of claims 11 to 15, wherein the apparatus further comprises a rule update module, and the rule update module is configured to:
test the neural network model by using test data, to obtain a test result; and
update the preset evaluation rule based on a preset target value and the test result.

17. The apparatus according to claim 16, wherein the rule update module is further configured to:
when the test result reaches or is better than the preset target value, update the preset evaluation rule based on a positive feedback mechanism; or
when the test result does not reach the preset target value, update the preset evaluation rule based on a negative feedback mechanism.

18. The apparatus according to any one of claims 11 to 17, wherein the neural network model comprises a plurality of computing layers; and the obtaining gradient information corresponding to the neural network model comprises:
obtaining gradient information for at least one computing layer of the neural network model.

19. The apparatus according to claim 18, wherein the neural network model comprises m computing layers, and m is a positive integer; and the obtaining gradient information for at least one computing layer of the neural network model comprises:
obtaining gradient information for an m^{th} computing layer of the neural network model.

20. The apparatus according to any one of claims 11 to 19, wherein before the model training apparatus performs iterative training on the to-be-trained neural network model, the apparatus further comprises a configuration module, wherein the configuration module is specifically configured to:
receive configuration information for the model training that is configured by a user through an interface, wherein the configuration information comprises dynamic training information that is selected by the user through the interface, and
the configuration information further comprises one or more of the following information: information about the neural network model, information about the training data set, a running parameter for the model training, and computing resource information for the model training.

21. A computer device, comprising:
a memory, configured to store a computer program; and
a processor, configured to execute the computer program stored in the memory, wherein when the computer program is executed, the processor is configured to perform the method according to any one of claims 1 to 10.

22. A computer-readable storage medium, wherein the computer-readable storage medium stores computer program instructions, and when the computer instructions are run on an electronic device, the electronic device is enabled to perform the method according to any one of claims 1 to 10.
